# EUROPÄISCHE PATENTSCHRIFT

(11) **EP 3 763 969 B1**
(45) Veröffentlichungstag und Bekanntmachung des Hinweises auf die Patenterteilung: **23.08.2023**
(21) Anmeldenummer: 19185075.9
(22) Anmeldetag: 08.07.2019
(51) Int. Cl.: F16H 25/20, F16K 31/50, F16K 7/12, F16D 43/202

(54) **VENTIL**
VALVE
SOUPAPE

(43) Veröffentlichungstag der Anmeldung: 13.01.2021
(73) Patentinhaber: Praher Plastics Austria GmbH, 4311 Schwertberg (AT)
(72) Erfinder: PRAHER, Winfried, 4320 Perg (AT); PÜHRINGER, Rainer, 4040 Steyregg-Plesching (AT)
(74) Vertreter: Jell, Friedrich

(56) Entgegenhaltungen:
- EP-A1- 2 278 199
- WO-A1-02/093056
- DE-U1-202014 100 716
- US-A- 3 029 660
- US-A- 5 851 003
- US-A1- 2011 315 906

## Beschreibung

Die Erfindung betrifft ein Ventil, insbesondere Membranventil, mit einem Ventilelement und mit einer mit dem Ventilelement zu dessen Betätigung verbundenen Betätigungseinrichtung, die eine erste Getriebeeinheit mit einer Gewindespindel, einer Spindelmutter und einem Endanschlag aufweist, welcher Endanschlag sich aus mindestens zwei einander zugewandten Anschlagflächen von Gewindespindel (6) und Spindelmutter bildet.

Ein Ventil, nämlich Membranventil, nach dem Oberbegriff des Anspruchs 1 ist aus der WO02/093056A1 bekannt. Unter anderem weist dieses Ventil zur Bewegungsbegrenzung des Ventilelements eine Getriebeeinheit mit einem Endanschlag auf. Dieser Endanschlag bildet sich zwischen zwei einander zugewandten Anschlagflächen an den einander gegenüberliegenden Stirnflächen von Gewindespindel und Spindelmutter aus. Solch ein Endanschlag kann zwar das Ventilelement gegenüber Beschädigung schützen und damit die Standfestigkeit des Ventils erhöhen, bedarf oftmals eines nicht unerheblichen Kraftaufwands zum Lösen der aufeinander aufgelaufenen Anschlagflächen - was die Handhabbarkeit des Ventils herabsetzt.

Zudem ist der vergleichsweise hohe Kraftaufwand zur Betätigung des Ventils aus der Endposition heraus dahingehend problematisch, dass dieser den Benutzer durchaus veranlassen könnte, in eine inkorrekte Richtung zu drehen. Mit einem Überdrehen der Betätigungseinrichtung und der dadurch gegebenen Gefahr einer mechanischen Überlastung ist zu rechnen - was die Standfestigkeit des Ventils verringert.

Die Erfindung hat sich daher die Aufgabe gestellt, ausgehend vom eingangs geschilderten Stand der Technik, ein Ventil zur Verfügung zu stellen, welches bei einfacher und sicherer Handhabbarkeit auch eine besonders hohe Standfestigkeit garantieren kann.

Die Erfindung löst die gestellte Aufgabe durch die Merkmale des Anspruchs 1.

Ein mechanisch besonders belastbarer Anschlag kann geschaffen werden, indem die Gewindespindel einen radial nach außen weisenden Anschlag mit der ersten Anschlagfläche ausbildet und die Spindelmutter einen radial nach innen weisenden Gegenanschlag mit der zweiten Anschlagfläche ausbildet.

Sind zudem bei aufeinander aufgelaufenen Anschlagflächen im Endanschlag die einander gegenüberliegenden Stirnflächen von Gewindespindel und Spindelmutter relativ zueinander kontaktfrei, kann beim Betätigen des Ventils eine Losbrechkraft oder ein Losbrechmoment gering gehalten werden - was nicht nur die Handhabung des Ventils erleichtert, sondern auch eine korrekte Betätigung des Ventils sicherstellt. Letztgenanntes wird insbesondere dadurch erreicht, dass ein Benutzer aufgrund einer vergleichsweise niedrigen Losbrechkraft oder niedrigem Losbrechmoment davon abgehalten wird, hohe Kraftbelastung entgegen der, in der jeweiligen Endposition korrekten Betätigungsrichtung aufzubringen. Das erfindungsgemäße Ventil kann sich daher nicht nur durch einfache und sichere Handhabbarkeit, sondern auch durch hohe Standfestigkeit auszeichnen.

Vorzugsweise ist die erste Anschlagfläche geneigt, insbesondere normal, zur Stirnfläche der Gewindespindel angeordnet, um die Losbrechkraft oder das Losbrechmoment zwischen Gewindespindel und Spindelmutter weiter zu verringern. Zudem schützt eine derart gestaltete erste Anschlagfläche die Gewindespindel gegenüber Zugbelastungen im Endanschlag, was eine Beschädigungsgefahr an der Verzahnung zwischen Gewindespindel und Spindelmutter vermindern bzw. die Standfestigkeit des Ventils erhöhen kann.

Vorstehend genannter Vorteil ist auch erreichbar, wenn die zweite Anschlagfläche geneigt, insbesondere normal, zur Stirnfläche der Spindelmutter angeordnet ist.

Die Konstruktionsverhältnisse an der ersten Getriebeeinheit können weiter vereinfacht werden, wenn die Flächennormalen der ersten und zweiten Anschlagfläche tangential zur Spindelachse verlaufen.

Sind die erste und zweite Anschlagfläche eben ausgebildet, können Singularitäten in der Flächenpressung zwischen den Anschlagflächen vermieden und auch eine konstante Losbrechkraft oder -moment über die Lebensdauer des Ventils ermöglicht werden. Es ist so möglich, für den Benutzer gleichbleibende Bedingungen der Handhabung, insbesondere eine gleichbleibende Haptik bei Betätigung des Ventils sicherzustellen - was zur Verringerung von Fehlbedienung und zur Erhöhung der Lebensdauer des Ventils beiträgt.

Vorzugsweise weist das Ventil eine Membran als Ventilelement auf.

Die Konstruktion kann weiter vereinfacht werden, wenn die Gewindespindel mit der Membran zu deren Betätigung verbunden ist.

Weist die Betätigungseinrichtung einen Antrieb, insbesondere Handantrieb, auf, der die erste Getriebeeinheit antreibt, ist die Betätigungseinrichtung im konstruktiven Aufwand weiter zu vereinfachen.

Das Ventil weist eine antriebsseitig vor der ersten Getriebeeinheit angeordnete, zweite Getriebeeinheit mit einem Überlastungsschutz auf, somit trägt die erfindungsgemäße erste Getriebeeinheit mit der vergleichsweise geringen Losbrechkraft oder - moment zur konstruktiven Vereinfachung des Überlastungsschutzes bei. Der Überlastungsschutz umfasst zwei über eine Axialverzahnung miteinander gekoppelte Getrieberäder und mindestens ein Federelement, welches Federelement das erste, axial verschiebbare Getrieberad auf das andere zweite Getrieberad andrückt und damit die Axialverzahnung gegen die, von der Axialverzahnung ausgeübten Ausrückkräfte in Eingriff hält.

Vorzugsweise sind die Ausrückkräfte durch asymmetrische Axialverzahnung je nach Drehrichtung des Antriebs unterschiedlich hoch, um die in den unterschiedlichen Bewegungsrichtungen, insbesondere Drehrichtungen, am Antrieb, insbesondere Handantrieb, unterschiedlich hohe Begrenzung der Kraft bzw. des Drehmoments zu ermöglichen.

Vorzugsweise schließt die zweite Getriebeeinheit an die erste Getriebeeinheit an, was für eine kompakte Ausführung des Ventils sorgen kann.

Dies ist umso mehr erreichbar, wenn das zweite Getrieberad auf der Spindelmutter sitzt.

In den Figuren ist beispielsweise der Erfindungsgegenstand anhand einer Ausführungsvariante näher dargestellt. Es zeigen
- Fig. 1: eine teilweise aufgerissene Seitenansicht auf ein Ventil,
- Fig. 2a: eine Explosionsansicht auf die erste Getriebeeinheit des nach Fig. 1 dargestellten Ventils,
- Fig. 2b: eine aufgerissene Seitenansicht auf die erste Getriebeeinheit des nach Fig. 1 dargestellten Ventils,
- Fig. 2c: eine Schnittansicht nach II-II auf die erste Getriebeeinheit des nach Fig. 1 dargestellten Ventils,
- Fig. 3a: eine Explosionsansicht auf die zweite Getriebeeinheit des nach Fig. 1 dargestellten Ventils und
- Fig. 3b: eine Detailsicht auf die zweite Getriebeeinheit des nach Fig. 1 dargestellten Ventils.

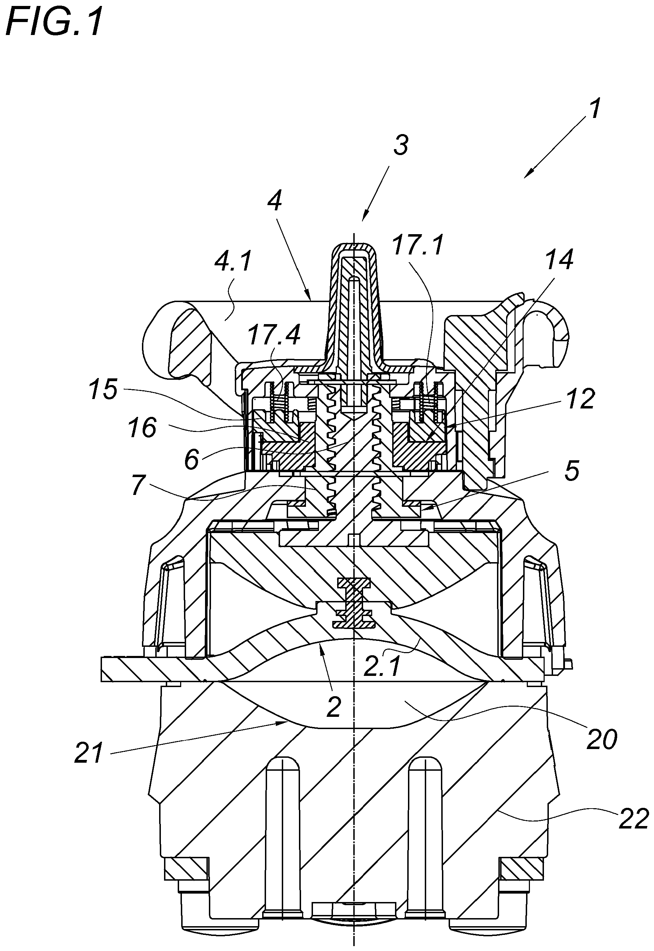

Nach Fig. 1 wird beispielsweise ein Ventil 1 dargestellt, das als Ventilelement 2 eine Membran 2.1 aufweist, welche über eine Betätigungseinrichtung 3 betätigt wird. Hierzu weist die Betätigungseinrichtung 3 einen Handantrieb 4.1 als Antrieb 4 auf, der mit einer ersten Getriebeeinheit 5 verbunden ist.

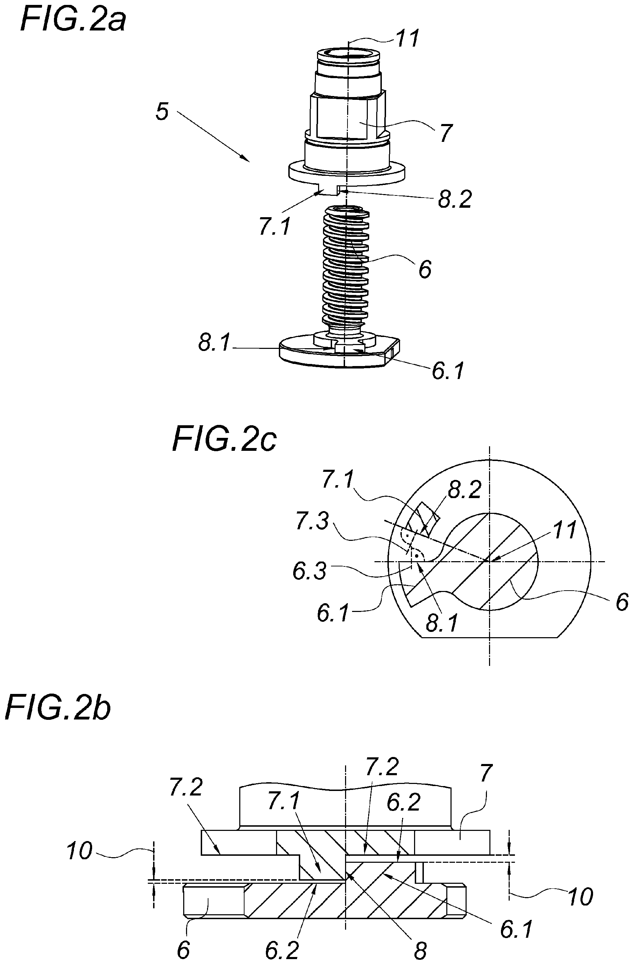

Diese Getriebeeinheit 5 umfasst ein Gewindespindel 6, eine Spindelmutter 7 und einen ersten Endanschlag 8 - wie anhand der Fig. 1 in Zusammenschau mit der Fig. 2b erkennbar -, wobei die Gewindespindel 6 mit der Membran 2.1 zu deren Betätigung indirekt verbunden ist und damit je nach Lage der Membran 2.1 einen Flüssigkeitskanal 20 sperrt oder öffnet, indem die Membran vom Ventilsitz 21 am Ventilkörper 22 abgehoben wird.

Der Endanschlag 8 bildet sich zwischen zwei einander zugewandten Anschlagflächen 8.1, 8.2 von Gewindespindel 6 und Spindelmutter 7 aus - und beschränkt den Hub der Membran 2.1 zu deren Schutz.

Der Bedarf eines vergleichsweise geringen Losbrechmoment oder einer vergleichsweise geringen Losbrechkraft werden sichergestellt, indem die Gewindespindel 6 einen radial nach außen weisenden Anschlag 6.1 mit der ersten Anschlagfläche 8.1 ausbildet und die Spindelmutter 7 einen radial nach innen weisenden Gegenanschlag 7.1 mit der zweiten Anschlagfläche 8.2 ausbildet - wie beispielsweise nach den Figuren 2a und 2b ersichtlich. Der Anschlag 6.1 ist somit von der Spindelachse 11 radial weg verlaufend, zeigt also eine Längserstreckung nach außen - der Verlauf bzw. die Längserstreckung des Gegenanschlags 7.1 ist von der Spindelmutter 7 radial nach innen, zur Spindelachse 11.

Zudem weisen bei aufeinander aufgelaufenen Anschlagflächen 8.1, 8.2 im Endanschlag 8 die einander gegenüberliegenden Stirnflächen 6.2, 7.2 von Gewindespindel 6 und Spindelmutter 7 einen axialen Abstand 10 zueinander auf - was dafür sorgt, dass diese Stirnflächen 6.2, 7.2 zueinander kontaktfrei sind. Damit wird der Flächenkontakt zwischen Gewindespindel 6 und Spindelmutter 7 besonders gering gehalten, wodurch Losbrechmomente reduziert und die Betätigung des Ventils erleichtert wird.

Die erste und zweite Anschlagfläche 8.1, 8.2, welche eben ausgebildet sind, sind normal zur Stirnfläche 6.2 bzw. 7.2 der Gewindespindel 6 bzw. Spindelmutter 7 angeordnet. Des Weiteren verlaufen die Flächennormalen 6.3, 7.3 tangential zur Spindelachse 11, wie dies nach Fig. 2b in Zusammenschau mit Fig. 2c zu erkennen ist.

So stehen die Flächennormalen 6.3, 7.3 in radialer Richtung von der Spindelachse 11 aus gesehen jeweils normal auf die Spindelachse 11.

Das Ventil 1 weist zudem eine zweite Getriebeeinheit 12 auf, die zwischen Handantrieb 4.1 und Spindelmutter 7 der ersten Getriebeeinheit 5 vorgesehen ist und damit antriebsseitig vor der ersten Getriebeeinheit 5 liegt. Dies deshalb, weil diese zweite Getriebeeinheit 12 einen Überlastungsschutz 13 für die Membran 2.1 umfasst.

Der Überlastungsschutz 13 weist zwei über eine Axialverzahnung 14 gekoppelte Getrieberäder 15, 16 und vier Federelemente 17.1, 17.2, 17.3, 17.4 auf. Die Federelemente 17.1, 17.2, 17.3, 17.4 drücken das erste Getrieberad 15, welches axial verschiebbar ist, auf das andere zweite Getrieberad 16.

Damit wird die Axialverzahnung 14 gegen, von der Axialverzahnung 14 ausgeübten Ausrückkräfte F_{R1}, F_{R2} in Eingriff gehalten, ermöglicht aber bei erhöhten Ausrückkräften F_{R1}, F_{R2}, also Kräften welche die Federkraft F_{F} der Federelemente 17.1, 17.2, 17.3, 17.4 übersteigen, ein Durchrutschen der Axialverzahnung 14. Damit kann bei aufeinander aufgelaufenen Anschlagflächen 8.1, 8.2 im Endanschlag 8 eine Überlastung der Wirkverbindung zur Membran 2.1 hin verhindert werden.

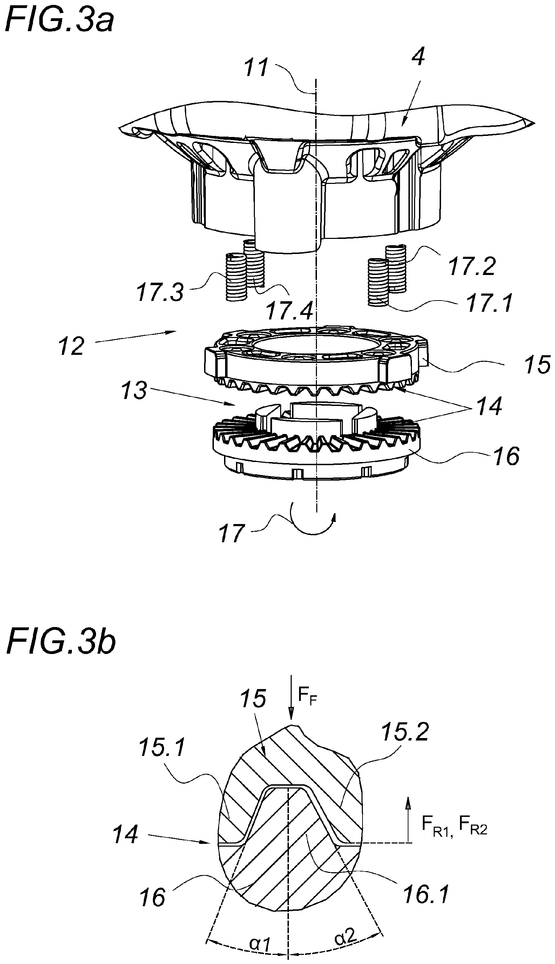

Wie in Fig. 3b weiter zu erkennen, ist die Axialverzahnung 14 asymmetrisch ausgeführt. So weisen die beiden Zahnflanken jedes Zahns 15.1, 15.2, 16.1 der Axialverzahnung 14 eine unterschiedliche Steigung, also unterschiedliche Teilflankenwinkel α1, α2, auf, was dazu führt, dass die Ausrückkräfte F_{R1}, F_{R2} je nach Drehrichtung 17 des Handantriebs 4.1 unterschiedlich hoch ausfallen. Einem Benutzer kann damit am Ventil 1 auch die Drehrichtung zuverlässig vermittelt werden - und dieser so haptisch feststellen, ob sich die Gewindespindel 6 am Endanschlag 8 befindet.

## Patentansprüche

1. Ventil, insbesondere Membranventil, mit einem Ventilelement (2) und mit einer mit dem Ventilelement (2) zu dessen Betätigung verbundenen Betätigungseinrichtung (3), die eine erste Getriebeeinheit (5) mit einer Gewindespindel (6), einer Spindelmutter (7) und einem Endanschlag (8) aufweist, welcher Endanschlag (8) sich aus mindestens zwei einander zugewandten Anschlagflächen (8.1, 8.2) von Gewindespindel (6) und Spindelmutter (7) bildet, dass das Ventil (1) eine antriebsseitig vor der ersten Getriebeeinheit (5) angeordnete, zweite Getriebeeinheit (12) mit einem Überlastungsschutz (13) aufweist, wobei der Überlastungsschutz (13) zwei über eine Axialverzahnung (14) miteinander gekoppelte Getrieberäder (15, 16) und mindestens ein Federelement (17.1, 17.2, 17.3, 17.4) umfasst, **dadurch gekennzeichnet, dass** das Federelement (17.1, 17.2, 17.3, 17.4) das erste, axial verschiebbare Getrieberad (15) auf das andere zweite Getrieberad (16) andrückt und damit die Axialverzahnung (14) gegen die, von der Axialverzahnung (14) ausgeübten Ausrückkräfte (F_{R1}, F_{R2}) in Eingriff hält, und dass die Gewindespindel (6) einen radial nach außen weisenden Anschlag (6.1) mit der ersten Anschlagfläche (8.1) ausbildet und die Spindelmutter (7) einen radial nach innen weisenden Gegenanschlag (7.1) mit der zweiten Anschlagfläche (8.2) ausbildet, wobei bei aufeinander aufgelaufenen Anschlagflächen (8.1, 8.2) im Endanschlag (8) einander gegenüberliegende Stirnflächen (6.2, 7.2) von Gewindespindel (6) und Spindelmutter (7) zueinander kontaktfrei sind.

2. Ventil nach Anspruch 1, **dadurch gekennzeichnet, dass** die erste Anschlagfläche (8.1) geneigt, insbesondere normal, zur Stirnfläche (6.2) der Gewindespindel (6) angeordnet ist.

3. Ventil nach Anspruch 1 oder 2, **dadurch gekennzeichnet, dass** die zweite Anschlagfläche (8.2) geneigt, insbesondere normal, zur Stirnfläche (7.2) der Spindelmutter (7) angeordnet ist.

4. Ventil nach Anspruch 1, 2 oder 3, **dadurch gekennzeichnet, dass** die Flächennormalen (6.3, 7.3) der ersten und zweiten Anschlagfläche (8.1, 8.2) tangential zur Spindelachse (11) verlaufen.

5. Ventil nach einem der Ansprüche 1 bis 4, **dadurch gekennzeichnet, dass** die erste und zweite Anschlagfläche (8.1, 8.2) eben ausgebildet sind.

6. Ventil nach einem der Ansprüche 1 bis 5, **dadurch gekennzeichnet, dass** das Ventil eine Membran (2.1) als Ventilelement (2) aufweist.

7. Ventil nach Anspruch 6, **dadurch gekennzeichnet, dass** die Gewindespindel (6) mit der Membran (2.1) zu deren Betätigung verbunden ist.

8. Ventil nach einem der Ansprüche 1 bis 7, **dadurch gekennzeichnet, dass** die Betätigungseinrichtung (3) einen Antrieb (4), insbesondere Handantrieb (4.1), aufweist, der die erste Getriebeeinheit (5) antreibt.

9. Ventil nach einem der Ansprüche 1 bis 8, **dadurch gekennzeichnet, dass** durch asymmetrische Axialverzahnung (14) die Ausrückkräfte (F_{R1}, F_{R2}) je nach Drehrichtung (17) des Antriebs (4) unterschiedlich hoch sind.

10. Ventil nach Anspruch 1 oder 9, **dadurch gekennzeichnet, dass** die zweite Getriebeeinheit (12) an die erste Getriebeeinheit (5) anschließt.

11. Ventil nach Anspruch 10, **dadurch gekennzeichnet, dass** das zweite Getrieberad (16) auf der Spindelmutter (7) sitzt.

## Claims

1. Valve, more particularly diaphragm valve, having a valve element (2) and having an actuating device (3) which is connected to the valve element (2) for the actuation thereof and has a first gear unit (5) with a threaded spindle (6), a spindle nut (7) and an end stop (8), which end stop (8) is formed from at least two mutually facing stop surfaces (8.1, 8.2) of the threaded spindle (6) and spindle nut (7), in that the valve (1) has a second gear unit (12) which is arranged on the drive side upstream of the first gear unit (5) and has an overload protector (13), wherein the overload protector (13) comprises two gearwheels (15, 16), which are coupled to one another via an axial gearing (14), and at least one spring element (17.1, 17.2, 17.3, 17.4), **characterized in that** the spring element (17.1, 17.2, 17.3, 17.4) presses the first, axially displaceable gearwheel (15) onto the other, second gearwheel (16) and thus holds the axial gearing (14) in engagement against the disengaging forces (F_{R1}, F_{R2}) exerted by the axial gearing (14), and **in that** the threaded spindle (6) has a radially outwardly facing stop (6.1) with the first stop surface (8.1) and the spindle nut (7) forms a radially inwardly facing counterstop (7.1) with the second stop surface (8.2), wherein, when the stop faces (8.1, 8.2) run up against one another in the end stop (8), mutually opposite end faces (6.2, 7.2) of the threaded spindle (6) and spindle nut (7) are free of contact with one another.

2. Valve according to claim 1, **characterized in that** the first stop surface (8.1) is arranged inclined, more particularly normal, to the end face (6.2) of the threaded spindle (6).

3. Valve according to claim 1 or 2, **characterized in that** the second stop surface (8.2) is arranged inclined, more particularly normal, to the end face (7.2) of the spindle nut (7).

4. Valve according to claim 1, 2 or 3, **characterized in that** the surface normals (6.3, 7.3) of the first and second stop surfaces (8.1, 8.2) extend tangentially to the spindle axis (11).

5. Valve according to one of claims 1 to 4, **characterized in that** the first and second stop surfaces (8.1, 8.2) are of flat design.

6. Valve according to one of claims 1 to 5, **characterized in that** the valve has a diaphragm (2.1) as valve element (2).

7. Valve according to claim 6, **characterized in that** the threaded spindle (6) is connected to the diaphragm (2.1) for actuation thereof.

8. Valve according to one of claims 1 to 7, **characterized in that** the actuating device (3) has a drive (4), more particularly manual drive (4.1), which drives the first gear unit (5).

9. Valve according to one of claims 1 to 8, **characterized in that**, due to asymmetrical axial gearing (14), the disengaging forces (F_{R1}, F_{R2}) are of different magnitudes depending on the direction of rotation (17) of the drive (4).

10. Valve according to claim 1 or 9, **characterized in that** the second gear unit (12) is connected to the first gear unit (5).

11. Valve according to claim 10, **characterized in that** the second gearwheel (16) is seated on the spindle nut (7).

## Revendications

1. Soupape, en particulier soupape à membrane, avec un élément de soupape (2) et avec un dispositif d'actionnement (3) relié à l'élément de soupape (2) pour son actionnement, qui présente une première unité de transmission (5) avec une broche filetée (6), un écrou de broche (7) et une butée d'extrémité (8), laquelle butée d'extrémité (8) se compose d'au moins deux surfaces de butée (8.1, 8.2) se faisant face de la broche filetée (6) et de l'écrou de broche (7), la soupape (1) présente une deuxième unité de transmission (12) disposée du côté de l'entraînement devant la première unité de transmission (5) avec une protection contre les surcharges (13), la protection contre les surcharges (13) présentant deux roues de transmission (15, 16) couplées l'une à l'autre par une denture axiale (14) et au moins un élément de ressort (17.1, 17.2, 17.3, 17.4), **caractérisée en ce que** l'élément de ressort (17.1, 17.2, 17.3, 17.4) presse la première roue de transmission (15) déplaçable axialement sur l'autre deuxième roue de transmission (16) et maintient ainsi la denture axiale (14) en prise contre les forces de débrayage (F_{R1}, F_{R2}) exercées par la denture axiale (14), et **en ce que** la broche filetée (6) forme une butée (6.1) dirigée radialement vers l'extérieur avec la première surface de butée (8.1) et l'écrou de broche (7) forme une contre-butée (7.1) orientée radialement vers l'intérieur avec la deuxième surface de butée (8.2), les surfaces frontales (6.2, 7.2) opposées l'une à l'autre de la broche filetée (6) et de l'écrou de broche (7) étant sans contact l'une avec l'autre lorsque les surfaces de butée (8.1, 8.2) se rejoignent en butée de limitation (8).

2. Soupape selon la revendication 1, **caractérisée en ce que** la première surface de butée (8.1) est inclinée, en particulier normale, par rapport à la surface frontale (6.2) de la broche filetée (6).

3. Soupape selon la revendication 1 ou 2, **caractérisée en ce que** la deuxième surface de butée (8.2) est inclinée, en particulier normale, par rapport à la surface frontale (7.2) de l'écrou de broche (7).

4. Soupape selon la revendication 1, 2 ou 3, **caractérisée en ce que** les normales à la surface (6.3, 7.3) de la première et de la deuxième surface de butée (8.1, 8.2) sont tangentielles à l'axe de la broche (11).

5. Soupape selon l'une quelconque des revendications 1 à 4, **caractérisée en ce que** la première et la deuxième surfaces de butée (8.1, 8.2) sont planes.

6. Soupape selon l'une quelconque des revendications 1 à 5, **caractérisée en ce que** la soupape présente une membrane (2.1) comme élément de soupape (2).

7. Soupape selon la revendication 6, **caractérisée en ce que** la broche filetée (6) est reliée à la membrane (2.1) pour son actionnement.

8. Soupape selon l'une quelconque des revendications 1 à 7, **caractérisée en ce que** le dispositif d'actionnement (3) présente un entraînement (4), en particulier un entraînement manuel (4.1), qui entraîne la première unité de transmission (5).

9. Soupape selon l'une quelconque des revendications 1 à 8, **caractérisée en ce que**, grâce à une denture axiale asymétrique (14), les forces de débrayage (F_{R1}, F_{R2}) sont différentes selon le sens de rotation (17) de l'entraînement (4).

10. Soupape selon la revendication 1 ou 9, **caractérisée en ce que** la deuxième unité de transmission (12) se raccorde à la première unité de transmission (5).

11. Soupape selon la revendication 10, **caractérisée en ce que** la deuxième roue de transmission (16) repose sur l'écrou de la broche (7).
